# FASCICULE DE BREVET EUROPEEN

(11) **EP 1 407 526 B1**
(45) Date de publication et mention de la délivrance du brevet: **24.05.2017**
(21) Numéro de dépôt: 02764990.4
(22) Date de dépôt: 16.07.2002
(51) Int. Cl.: H02K 11/04

(54) **MACHINES ELECTRIQUES TOURNANTES, NOTAMMENT ALTERNATEURS POUR VEHICULE AUTOMOBILE COMPRENANT UN AGENCEMENT DE REDRESSEMENT DE COURANT**
ROTIERENDE ELEKTRISCHE MASCHINEN, INSBESONDERE LICHTMASCHINEN VON KRAFTFAHRZEUGEN MIT EINER STROMGLEICHRICHTERBAUGRUPPE
ROTATING ELECTRICAL MACHINES, IN PARTICULAR MOTOR VEHICLE ALTERNATORS COMPRING A CURRENT RECTIFIER ASSEMBLY

(30) Priorité: 16.07.2001 FR 0109480
(43) Date de publication de la demande: 14.04.2004
(60) Demande divisionnaire: 08169277.4
(73) Titulaire: VALEO EQUIPEMENTS ELECTRIQUES MOTEUR, 94017 Créteil (FR)
(72) Inventeur: AESCHLIMANN, Michel, F-75012 Paris (FR); ARRIGHI, Sébastien, F-78000 Versailles (FR); FAVEROLLE, Pierre, F-91230 Montgeron (FR); HEVIA, Thierry, F-62520 Le Touquet (FR); SCHULTE, Dirk, F-94120 Fontenay-sous-Bois (FR)
(74) Mandataire: Gamonal, Didier
(86) Numéro de dépôt international: PCT/FR2002/002541
(87) Numéro de publication internationale: WO 2003/009451

(56) Documents cités:
- EP-A1- 1 030 545
- WO-A-00/01055
- FR-A- 1 457 157
- FR-A- 2 796 776
- FR-A1- 2 687 861
- GB-A- 1 091 922
- US-A- 5 812 388
- US-A- 5 991 184

## Description

### Domaine de l'invention

L'invention concerne une machine électrique tournante, notamment alternateur pour véhicule automobile, comportant un agencement de redressement de courant.

### Etat de la technique

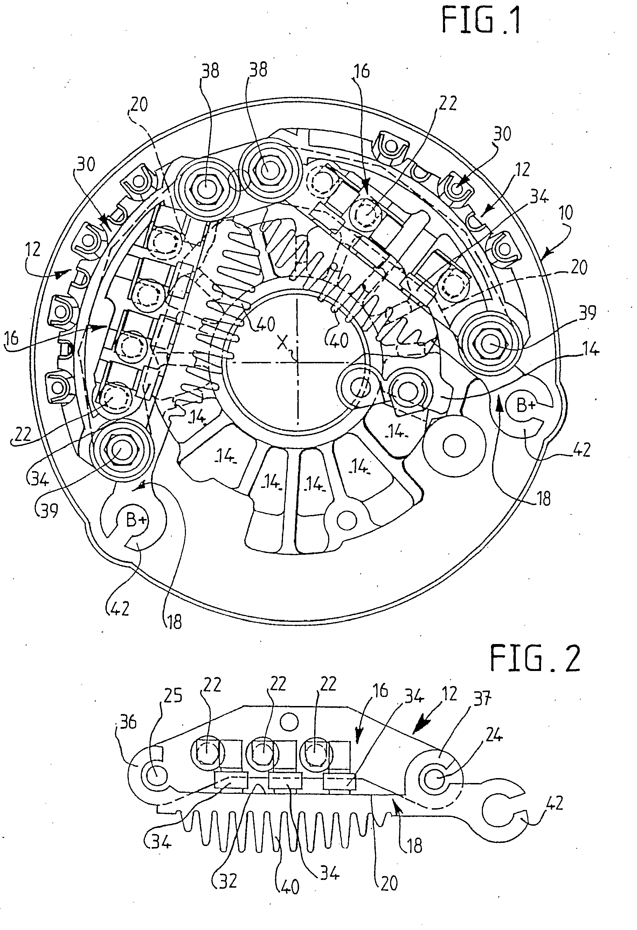

Un agencement de redressement permettant de transformer le courant alternatif induit du stator de la machine en courant continu pour alimenter les différents consommateurs du véhicule est déjà connu par le brevet français N° 2 687 861 de la demanderesse. Les figures 1 et 2 illustrent cet agencement redresseur. La figure 1 montre en 16 deux plaques de support des diodes négatives portant la référence 22, qui sont disposées selon une configuration en V. Chaque plaque négative présente la forme d'un secteur circulaire à pans coupés dont la périphérie interne 20 est en retrait de la périphérie extérieure d'ouvertures 14 qui sont ménagées dans le pallier arrière 10 de la machine et destinées à laisser passer un flux d'air axial de refroidissement engendré par un ventilateur monté à l'intérieur de la machine au voisinage des ouvertures 14. Ainsi qu'on le sait ce ventilateur est solidaire du rotor de la machine Les diodes négatives 22 sont disposées en contact mécanique et électrique avec la paroi supérieure de leurs plaques de support. Les figures 1 et 2 montrent en outre en 18 deux supports de diodes positives 34, chacun formé par un profilé extrudé en aluminium et globalement situé en face des ouvertures 14. Ces profilés accomplissant la fonction de radiateurs n'ont aucun contact mécanique ou électrique avec le palier arrière 10 et leur refroidissement est uniquement assuré par convection, c'est-à-dire par le flux d'air traversant les ouvertures 14 et produit de façon connue en soi par un ventilateur solidaire en rotation du rotor de l'alternateur. Chaque radiateur 18 est associé à une plaque négative 16. Il comprend une paroi plane arrière 32, perpendiculaire à la face supérieure plane de la plaque négative associée. Sur cette face 32 qui est située à la périphérie extérieure des ouvertures 14 sont montées les diodes positives 34. Sur sa face frontale orientée vers l'axe X de la machine sont prévues des ailettes de refroidissement 40 qui s'étendent donc radialement dans le flux d'air de refroidissement et sont soumis à un refroidissement par convection. On constate que les deux extrémités de chaque ensemble formé par une plaque négative 16 et un radiateur positif 18 sont fixées chacune par un tirant ou une vis 38, 39 au flasque arrière 10 et que les deux radiateurs sont reliés par une barrette de liaison.

L'agencement de redressement, qui vient d'être décrit brièvement présente l'inconvénient majeur d'être encombrant et que le principe de la configuration des supports et de la disposition des diodes ne permet pas une augmentation de la capacité de refroidissement, ce qui rend cet agencement de redressement connu incompatible avec des alternateurs de plus forte puissance.

Un brevet ayant pour numéro de publication US 5 991 184 divulgue un redresseur ayant des diodes. Le document EP 1 030 545 décrit une machine électrique tournante, notamment alternateur pour véhicule automobile, comportant un agencement de redressement de courant comprenant :
- un dispositif de support d'une pluralité diodes positives,
- un support d'une pluralité de diodes négatives,
- un connecteur de diodes, et dans lequel:
   - le support des diodes positives forme un radiateur positif portant, sur la face frontale avant agencée pour être orientée vers l'axe de la machine, des ailettes de refroidissement qui sont agencée pour s'étendre d'une part dans l'écoulement axial et d'autre part dans la direction radiale de la machine,
   - le dispositif de radiateur positif est réalisé sous forme d'au moins une pièce moulée, dont la face orientée vers l'axe précité porte des fines ailettes de refroidissement procurant une surface d'échange thermique, et
- un dispositif de refroidissement pour créer un écoulement forcé d'un fluide de refroidissement, tel que de l'air, dans la direction axiale de la machine, entre les ailettes de refroidissement.

### Objet de l'invention

La présente invention a pour but de pallier cet inconvénient de l'agencement de redressement connu.

Pour atteindre ce but, selon l'invention il est proposé une machine électrique tournante, notamment alternateur pour véhicule automobile comportant un agencement de redressement de courant, l'agencement comprenant :
- un dispositif de support d'une pluralité diodes positives qui comprend deux parties de support de diodes,
   - Chaque partie du support présentant la forme générale d'une plaque de forme allongée, alignées dans la direction périphérique autour de l'axe de la machine,
   - le dispositif de support étant fixé au palier arrière par trois fixations, l'une des trois est située dans la zone de jonction des deux parties, et en ce que l'agencement comprend en outre
- un support d'une pluralité de diodes négatives, en forme de plaque faisant partie du palier arrière de la machine,
- un connecteur de diodes, et dans lequel :
   - les supports des diodes positives et négatives et le connecteur sont superposés dans le sens de l'axe de la machine,
   - le support des diodes positives forme un radiateur positif portant, sur la face frontale avant orientée vers l'axe de la machine, des ailettes de refroidissement qui s'étendent d'une part dans l'écoulement axial et d'autre part dans la direction radiale de la machine,
   - le dispositif de radiateur positif est réalisé sous forme d'au moins une pièce moulée, dont la face orientée vers l'axe précité porte des ailettes de refroidissement procurant une surface d'échange thermique, et
- un dispositif de refroidissement pour créer un écoulement forcé d'un fluide de refroidissement, tel que de l'air, dans la direction axiale de la machine, entre les ailettes de refroidissement. Des modes de réalisation avantageux de l'invention sont décrits dans les revendications dépendantes 2 à 13.

### Brève description des dessins

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple et illustrant plusieurs modes de réalisation de l'invention et dans lesquels :
- la figure 1 est une vue de dessus d'un agencement de redressement de l'état de la technique, monté sur un palier arrière d'alternateur ;
- la figure 2 montre une partie de l'agencement selon la figure 1 sans le palier arrière ;
- la figure 3 est une vue en perspective des deux radiateurs positifs, de structures identiques avant leur assemblage pour la réalisation d'un dispositif radiateur positif de l'agencement de redressement selon l'invention ; selon un premier mode de réalisation ;
- la figure 4 est une vue en perspective des deux radiateurs positifs selon la figure 1, après leur assemblage ;
- la figure 5A est une vue partielle en coupe dans un plan radial du dispositif de redressement, d'un autre mode de réalisation d'un dispositif radiateur positif ;
- la figure 5B est une vue, avec arrachement, en direction de la flèche VB de la figure 5A ;
- la figure 5C est une vue en direction de la flèche VC de la figure 5A ;
- les figures 6A, 6B et 6C sont des vues similaires aux figures 5A, 5B, 5C d'une variante de réalisation d'un radiateur positif selon l'invention ;
- les figures 7A, 7B et 7C sont des vues similaires aux vues 5A, 5B, 5C d'encore une autre variante d'un radiateur positif selon l'invention ;
- les figures 8A, 8B, 8C sont des vues similaires aux vues 7A, 7B, 7C d'encore une autre variante de réalisation d'un radiateur positif selon l'invention ;
- la figure 9 est une vue en perspective d'un mode de réalisation du dispositif radiateur positif de l'agencement de redressement selon l'invention, réalisé sous forme d'une pièce moulée unique ;
- la figure 10 est encore un autre mode de réalisation du dispositif radiateur positif d'un agencement de redressement selon l'invention, réalisé sous forme d'une pièce moulée unique ;
- les figures 11A et 11B illustrent l'implantation des diodes par emmanchement dans un radiateur moulé selon l'invention, et
- les figures 12A et 12B illustrent l'implantation des diodes par brasage sur un radiateur d'un agencement de redressement selon l'invention.
- la figure 13 est une vue en perspective d'encore un autre mode de réalisation du dispositif radiateur positif d'un agencement de redressement selon l'invention,
- la figure 14 est une vue en perspective d'un pont douze de diodes équipé d'une autre version de réalisation du radiateur positif selon la figure 13.

### Description de modes de réalisation de l'invention

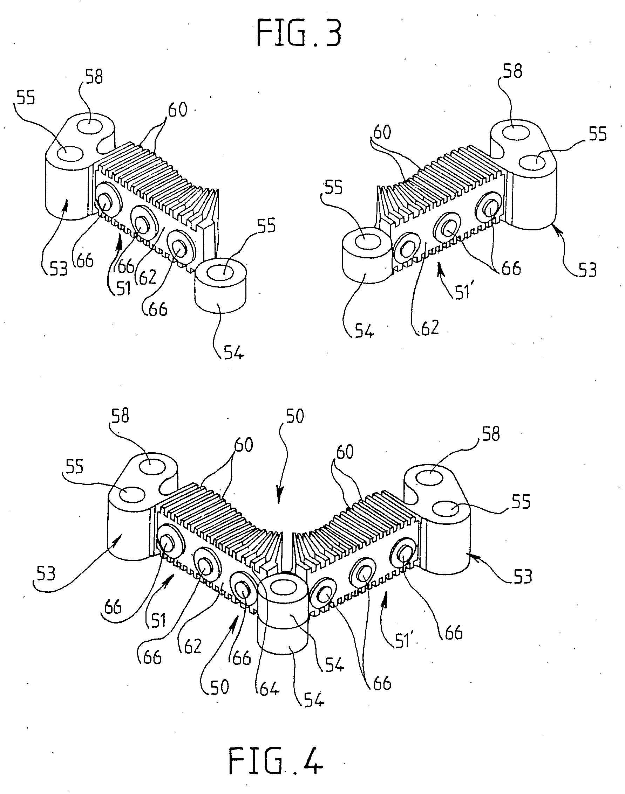

La figure 4 illustre un premier mode de réalisation d'un dispositif radiateur positif, selon l'invention, désigné par la référence générale 50, qui est obtenue par assemblage de deux radiateurs positifs moulés 51, 51' de structures identiques, montrés sur la figure 3. Chaque radiateur 51, 51', de forme générale allongée droite comporte, à chacune de ses extrémités, une patte 53, 54 de fixation au palier arrière de la machine qui est percée d'un trou 55 pour le passage d'un organe de fixation tel qu'une vis ou un tirant avec interposition d'une douille électriquement isolante (non représentés). La patte de fixation 54 située du côté de la jonction des deux radiateurs 51, 51' présente une forme cylindrique d'une hauteur correspondant, dans l'exemple représenté, à la moitié de la hauteur du corps du radiateur. La patte de fixation 53 située à l'extrémité opposée du radiateur comporte en plus du trou de passage d'organe de fixation 55 un trou 57 de réception de la borne B+ de sortie du redresseur. Ici les radiateurs sont identiques.

Etant donné que les radiateurs sont des pièces moulées, elles sont configurées de façon à comporter sur leur face frontale avant une multitude de fines ailettes de refroidissement 60 qui s'étendent dans la direction radiale de la machine de façon que le fluide de refroidissement puisse s'écouler entre les ailettes. Comme on le voit sur la figure 4 qui montre l'ensemble 50 obtenu par assemblage des deux radiateurs 51, 51', la longueur radiale des ailettes 60 est différente sur la longueur des radiateurs de façon que la ligne formée par les bords avant des ailettes s'approche d'un arc de cercle dans la zone de jonction des radiateurs 51, 51'. La figure 4 illustre également que l'assemblage des radiateurs se fait par superposition de leurs pattes de fixation sensiblement cylindriques 54. Etant donné que ces pattes font saillie de la face frontale arrière plane 62 des radiateurs, l'écartement entre les ailettes extérieures adjacentes des deux radiateurs 51, 51' peut être relativement faible. Autrement dit, pratiquement toute la face avant de l'ensemble formé par les deux radiateurs est recouverte de fines ailettes de refroidissement 60. On constate que le corps de chaque radiateur comporte sur ses faces supérieure et inférieure vues dans la direction axiale de la machine des nervures 64 chacune dans le prolongement d'une ailette 60.

La face arrière plane 62 de chaque radiateur porte trois diodes positives 66 qui sont fixées sur le radiateur par brasage. Les diodes négatives non représentées sur les figures 3 et 4 s'étendant parallèlement à l'axe de la machine. Les diodes positives et négatives se trouvent donc implantées perpendiculairement les unes aux autres. Il ressort de la description qui vient d'être faite, du mode de réalisation des radiateurs positifs selon les figures 3 et 4 que ces radiateurs peuvent comprendre, en raison du caractère très fin des ailettes, un grand nombre de telles ailettes pour un refroidissement très efficace du radiateur.

Etant donné que les pattes de fixations des deux radiateurs sont superposées, l'ensemble représenté sur la figure 4 ne comporte au milieu qu'un seul emplacement de fixation, ce qui permet de supprimer la barrette de liaison des deux radiateurs positifs standards montrée par exemple sur la figure 1. La suppression de la barrette de liaison et ainsi d'un emplacement de fixation procure un gain d'espace utile au niveau de la jonction des deux radiateurs. Ceci permet de rapprocher les deux diodes positives centrales et un écartement maximal des diodes négatives sur le palier arrière. Un autre avantage réside dans le fait que les deux radiateurs peuvent être identiques.

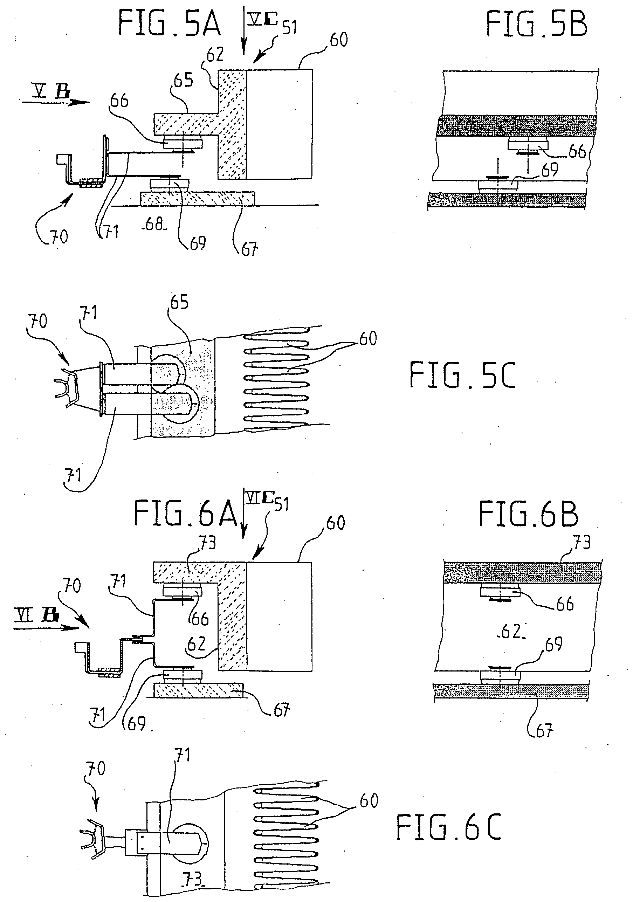

En ce référent aux figures 5 à 10 on décrit d'autres modes de réalisation des radiateurs positifs, qui ont en commun que les diodes positives et négatives sont emmanchées parallèlement les unes aux autres et montées par emmanchement ou par brasage tête-bêche ou orientées parallèlement. Le support des diodes négatives est ici métallique est sera appelé dissipateur négatif.

Les figures 5A à 5C illustrent un mode de réalisation des radiateurs, qui est caractérisé par une configuration symétrique. La particularité des radiateurs positifs désignée toujours par la référence 51 de ce mode de réalisation par rapport à celui représenté sur les figures 3 et 4 réside dans le fait que la face arrière plane 62 porte à mi-hauteur un muret 65 qui fait saillie à mi-hauteur du radiateur perpendiculairement de cette face arrière 62. La face inférieure du muret sur laquelle les diodes positives 66 sont brasées est en regard du dissipateur négatif indiqué en 67 et plaqué à fixation sur le palier arrière 68 de la machine. Les diodes négatives 69 sont brasées sur la face supérieure du dissipateur. Les diodes positives 66 et négatives 69 sont implantées tête-bêche. Le connecteur est désigné par la référence 70 et se distingue par la simplicité des languettes 71 de liaison des diodes. Les figures montrent que les diodes positive et négative de chaque paire de diodes sont décalées à la fois dans la direction radiale et circonférentielle.

Les figures 6A à 6C illustrent une variante de réalisation dans laquelle la face arrière 62 de chaque radiateur est pourvue d'un muret 73 perpendiculairement en saillie, mais qui est disposé en haut du radiateur. Celui-ci, par conséquent, présente une structure non symétrique. Les diodes positives 66 et négatives 69 sont brasées tête-bêche sur les faces en regard du muret 73 et du dissipateur négatif 67. Elles se trouvent dans un même plan vertical. Dans cette variante les diodes sont plus éloignées les unes des autres.

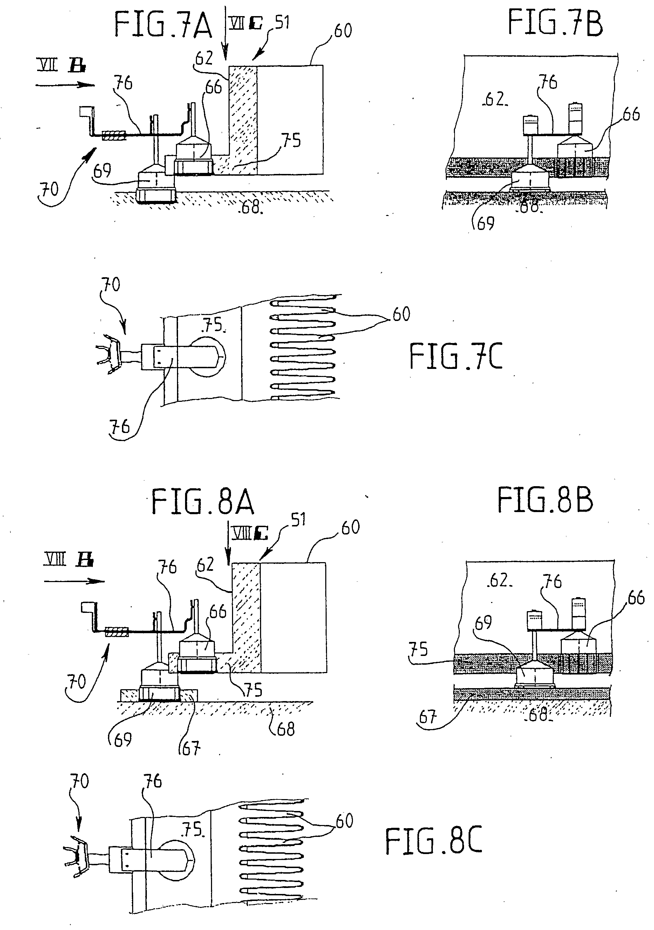

Les figures 7A à 7C présentent un mode de réalisation d'un radiateur 51 dont la particularité réside dans le fait qu'un muret d'implantation des diodes positives et portant maintenant la référence 75 se trouve au niveau du bord inférieur du radiateur. Les diodes positives 66 sont emmanchées dans le muret 75, les queues des diodes s'étendant vers le haut. Les diodes négatives 69 sont emmanchées dans le palier arrière 68, avec leur queue orientées également vers le haut. Comme le montre les figures 7A et 7B, les emplacements des diodes positive et négative de chaque paire sont décalés radialement et circonférentiellement. Le connecteur 70 se distingue par la simplicité de la liaison des diodes indiquée en 76.

Les figures 8A à 8C montrent une variante de réalisation de celle représentée sur les figures 7A à 7C, qui a pour particularité que les diodes négatives sont emmanchées sur un dissipateur 67, qui est plaqué sur le palier arrière 68. Le connecteur 70 présente la même configuration simple que sur les figures 7A à 7C.

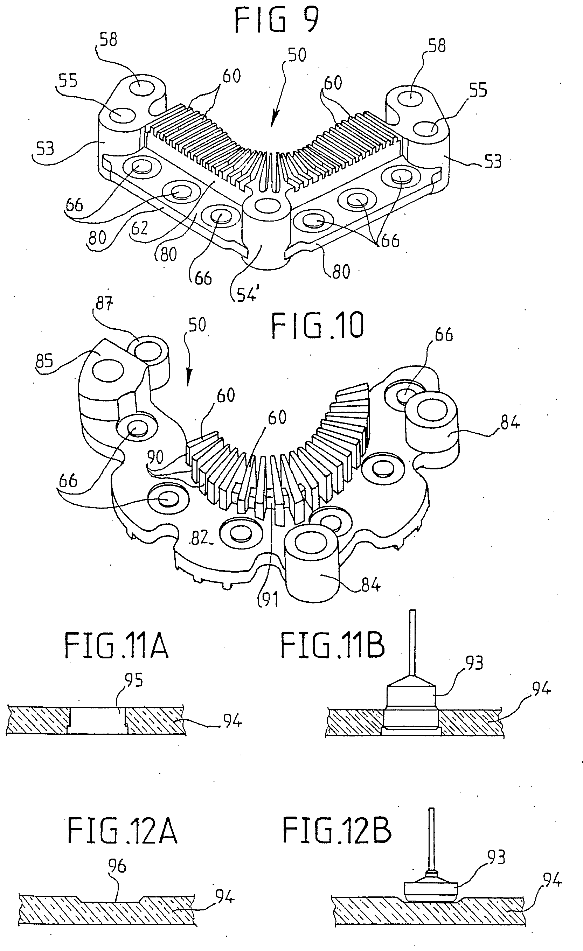

Les figures 9 et 10 illustrent deux versions de réalisation d'un mode de réalisation selon lequel le dispositif radiateur, au lieu d'être obtenu par assemblage de deux radiateurs est réalisé sous forme d'une seule pièce moulée.

Dans la version de réalisation selon la figure 9, le dispositif radiateur présente une configuration en V, avec trois fixations comme dans le cas de la figure 4. Les pattes de fixation situées aux extrémités du V correspondent aux pattes 53 des figures 3 et 4 et portent donc la même référence. La fixation centrale à la pointe du V qui s'étend maintenant sur toute la hauteur du dispositif radiateur est indiquée par la référence 54'. Comme dans le mode de réalisation selon les figures 3 et 4 les pattes de fixation sont décalées vers l'arrière par rapport à la face frontale arrière désignée, comme auparavant, par la référence 62. Entre les pattes de fixation extérieures 53 et centrale 54' s'étend, sur chaque branche du V un muret 80 qui fait saillie de la face arrière 62 et sert de support pour l'implantation des diodes positives 66 qui s'étendent alors parallèlement aux diodes négatives.

Concernant la réalisation des fines ailettes de refroidissement portant, comme auparavant, la référence 60, elles présentent la même disposition que sur la figure 4, avec pour avantage cependant que, dans la zone centrale, cette disposition est complètement régulière, sans discontinuité, en raison de la réalisation en une pièce du dispositif radiateur.

La version de réalisation du dispositif radiateur représentée sur la figure 10 a pour particularité que de dispositif présente une configuration circulaire. Dans ce cas le corps désigné par 82, du dispositif radiateur est réalisé sous forme d'une plaque présentant la forme générale d'un segment en forme d'un arc de cercle sur laquelle sont implantées six diodes positives 66. Les fixations du dispositif radiateur au palier arrière de la machine sont réalisées sous forme d'éléments troués pour le passage à isolation électrique des vis ou des tirants précités. Deux de ces éléments notés 84 constituent des surépaisseurs s'étendant au-delà de la face d'implantation des diodes. Ces éléments 84 présentent une forme cylindrique et sont situés à la périphérie extérieure de la plaque 82 respectivement près d'une extrémité et du milieu, tandis qu'un élément 85 constitue une surépaisseur recouvrant l'autre extrémité de la plaque. L'élément 85 sert à l'implantation de la borne B⁺ de la sortie de l'agencement de redressement et s'étend au-delà de la face d'implantation des diodes ; ladite borne étant destinée à être reliée à la borne positive de la batterie du véhicule. A cette extrémité formée par l'élément 85 est associé à la face d'extrémité du segment en forme d'un arc de cercle qui constitue la plaque 82, une excroissance 87 qui sert également d'élément de fixation.

De la face radialement interne de la plaque de radiateur positif 82 s'étendent des ailettes de refroidissement radiales 60 qui se prolongent en 90 sur une partie des faces supérieure et inférieure de la plaque de radiateur 82 en direction des diodes. On constate encore une surépaisseur 91 sur le bord radialement interne de la plaque 82 entre chaque paire d'ailettes 60 devant cinq des six diodes positives 66. On constate qu'une diode 66 est disposée près de l'extrémité de la plaque opposée à celle qui est pourvue de la patte 87 et qu'un élément de fixation 84 est disposé entre cette diode et la diode suivante, tandis que le deuxième élément de fixation 84 est disposé au niveau de la partie périphérique centrale de la plaque entre la troisième diode et la quatrième diode. On constate encore que les parties d'ailette 90 sur la face supérieure de la plaque s'étendent jusqu'au niveau des deuxième, troisième et quatrième diodes jusqu'à la proximité de celles-ci. Quant à la sixième diode elle est implantée juste à côté de la surépaisseur de fixation 85 de la borne B⁺. Il est encore à noter que le bord extérieur de la plaque de radiateur 82 est ondulé, avec une zone de largeur maximale au niveau de chaque diode.

Concernant les figures 11 et 12, les figures 11A et 11B illustrent l'implantation par emmanchement d'une diode indiqué en 93 dans un support 94 pouvant être un muret ou une plaque. La figure 11A montre que le support est pourvu d'un alésage de réception 95 dans laquelle sera alors emmanchée la diode, comme le montre la figure 11B, le corps de la diode étant avantageusement moleté.

La figure 12A montre une cuvette 96 de réception d'une diode, réalisé dans le support 94 et dans laquelle sera ensuite implantée une diode 93 par brasage, conformément à la figure 12B.

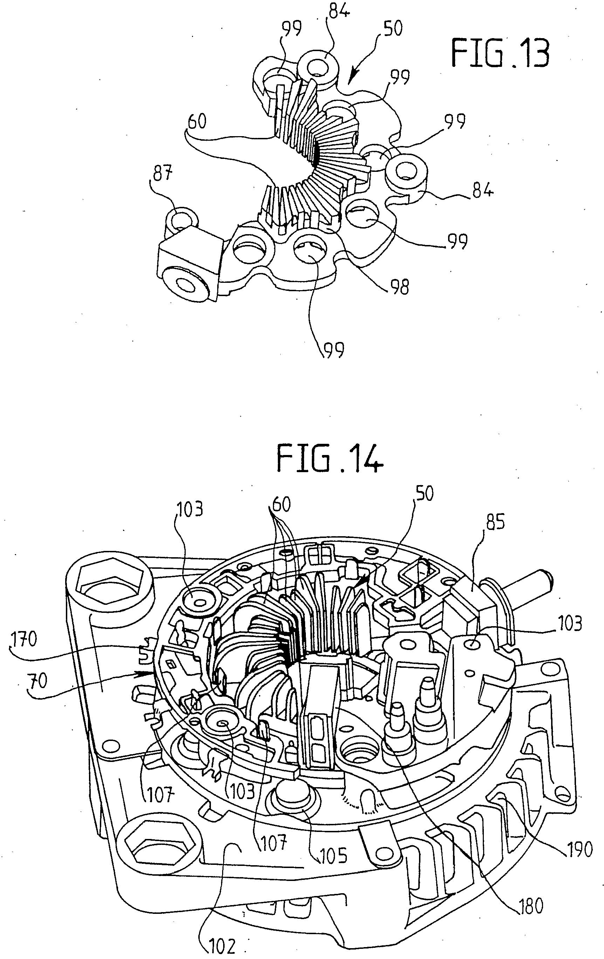

La figure 13 illustre une version de réalisation du dispositif radiateur selon l'invention, qui ressemble au radiateur selon la figure 10 et se distingue de celui-ci par le fait que les surépaisseurs 91 sont réalisées sous forme d'un muret 98 qui s'étend le long du bord radialement interne du radiateur, le bord et le muret présentant une allure ondulée s'approchant au mieux des alésages de réception 99 des diodes positives. Les ailettes 60 s'étendent à partir du bord arrière du muret. Le muret 98 et ainsi les ailettes 60 s'étend jusque dans la zone entre deux alésages d'implantation 99 adjacentes, ce qui augmente le rendement thermique du pont redresseur.

La figure 14 montre un pont à douze diodes dans son ensemble, qui est conçu en prenant en compte les caractéristiques avantageuses de l'invention, qui ont été énoncées ci-avant. On constate que le radiateur positif indiqué en 50 est fixé sur le palier arrière 102 ajouré en trois points 103. Les diodes négatives sont emmanchées sur le palier arrière directement ou en variantes dans des colonnettes 105 issues du support. Le radiateur positif est optimisé par une disposition et configuration des ailettes radiales 60, qui sont adaptées à la répartition angulaire des diodes positives dont seulement les queues sont indiquées en 107 sur la figure 14. On constate que deux ailettes 60, plus courtes, s'étendent jusque devant une diode positive et que deux ailettes 60 s'étendent profondément dans la zone située entre deux diodes. Ainsi chaque diode est encadrée par des ailettes, à l'avant et aux deux côtés. Il est encore à noter que les diodes positives et négatives sont connectées de la manière illustrée sur les figures 7 et 8.

Comme il ressort de la description qui vient d'être faite, de plusieurs modes de réalisation de l'invention, le dispositif radiateur positif proposé par l'invention, particulièrement adapté pour un pont douze diodes est réalisé par moulage ce qui présente l'avantage de pouvoir lui conférer une forme ou configuration souhaitée avec un grand nombre de fines d'ailettes de refroidissement procurant une grande surface d'échange thermique et assurant un refroidissement optimal des diodes. Le dispositif radiateur ainsi réalisé peut être utilisé avantageusement pour des alternateurs triphasés avec deux bobinages en parallèle avec six sorties et pour des alternateurs hexaphasés avec six sorties.

Le dispositif radiateur positif en raison de sa réalisation par moulage assure un refroidissement par convection grâce à l'implantation d'un maximum d'ailettes, tout en permettant une réduction de l'encombrement. De plus, les diodes négatives sur le palier arrière peuvent être écartées davantage que jusqu'à présent, du fait de la réduction du nombre des points de fixation de quatre à trois et la suppression de la barrette de liaison des deux radiateurs positifs séparés utilisés jusqu'à présent. De plus l'invention permet une simplification des languettes de liaison des diodes.

Sur la figure 14 on a arraché la partie supérieure du connecteur 70 pour montrer les traces électriquement conductrices que présente celui-ci, lesdites traces étant noyées dans la matière électriquement isolantes du connecteur, sauf par endroits, par exemple au niveau des pattes de fixation 170 des sorties de phase du stator et des languettes de liaison du type des pattes 76, avec les queues 107 des diodes positives. Pour plus de précisions sur les sorties des phases du stator que comporte l'alternateur on se reportera par exemple au document FR 01 04 770 déposé le 5 Avril 2001. Pour mémoire on rappellera que le palier arrière forme avec un palier avant un carter à l'intérieur duquel est fixé le corps du stator de l'alternateur, lequel est solidaire d'un arbre monté à rotation sur les paliers avant et arrière à la faveur de roulements à billes.

L'arbre du rotor présente à son extrémité arrière des bagues collectrices reliées aux extrémités du bobinage d'excitation du rotor. Les bagues sont destinées à coopérer avec des balais montés dans un porte-balais référencé en 180 à la figure 14. Un ventilateur est monté sur l'arbre du rotor de manière adjacente au palier arrière pour aspirer l'air et créer une circulation de l'air entre les ailettes, à travers les trous adjacents du palier arrière pour refouler l'air vers les chignons arrières que présente le bobinage du stator. L'air ressort à travers les ouvertures latérales du palier arrière référencées en 190.

Bien entendu un capot de protection est prévu pour coiffer l'agencement de redressement et se fixer sur le palier arrière. Ce capot, de forme creuse, est ajouré au niveau des ailettes, c'est-à-dire au niveau des son fond pour laisser passer l'air aspiré par le ventilateur arrière.

On notera que le connecteur 70 a une forme de section annulaire et qu'il s'étend au-dessus des diodes positives. Sa périphérie interne est délimitée par la périphérie externe des ailettes 60 présentant à leur périphérie externe une forme arrondie. En référence à la figure 13 on notera que le radiateur positif présente à sa périphérie externe des échancrures pour le passage des queues des diodes négatives. Il en est de même à la figure 14. Le connecteur 70 a donc une forme annulaire et recouvre la plaque du radiateur positif, qui est métallique. En variante les diodes négatives sont fixées directement sur le palier arrière. Avantageusement le capot précité est doté d'ouvertures au niveau des diodes négatives pour la ventilation de celles-ci. Les ouvertures sont réalisées dans le bord annulaire d'orientation axial du capot. Le fond du capot est doté d'ouvertures en regard des ailettes.

On notera que dans les figures 5A à 8A on a schématisé par un rectangle la partie en matière électriquement isolante du connecteur 70. A la figure 14 on notera également qu'il est prévu un régulateur de tension au voisinage du porte-balais 180.
Avantageusement le capot de protection est doté également d'ouvertures réalisées dans sa jupe cylindrique au niveau du support des diodes négatives en sorte que le support des diodes négatives est refroidit par convection et conduction. Ceci est particulièrement avantageux pour le mode de réalisation des figures 5 à 10 ; le radiateur 51 étant refroidit par l'air traversant le fond du capot.

## Revendications

1. Machine électrique tournante, notamment alternateur pour véhicule automobile comportant un dispositif de refroidissement pour créer un écoulement forcé d'un fluide de refroidissement, tel que de l'air, dans la direction axiale de la machine, entre des ailettes de refroidissement (60) et comportant un agencement de redressement de courant, l'agencement comprenant :
- un dispositif de support d'une pluralité diodes positives (66) qui comprend deux parties de support de diodes,
• Chaque partie du support présentant la forme générale d'une plaque de forme allongée, alignées dans la direction périphérique autour de l'axe de la machine,
• le dispositif de support étant fixé au palier arrière (68) par trois fixations (53, 54, 54', 84, 85), l'une des trois est située dans la zone de jonction (54, 54', 84) des deux parties (51), et en ce que l'agencement comprend en outre
- un support d'une pluralité de diodes négatives (69), en forme de plaque faisant partie du palier arrière (68) de la machine,
- un connecteur de diodes (70), et dans lequel :
• les supports des diodes positives (66) et négatives (69) et le connecteur sont superposés dans le sens de l'axe de la machine,
• le support des diodes positives (66) forme un radiateur positif (50, 51, 51') portant, sur la face frontale avant orientée vers l'axe de la machine, les ailettes de refroidissement qui s'étendent d'une part dans l'écoulement axial et d'autre part dans la direction radiale de la machine,
• le dispositif de radiateur positif (50, 51, 51') est réalisé sous forme d'au moins une pièce moulée (50, 51, 51'), dont la face orientée vers l'axe précité porte des ailettes de refroidissement (60) procurant une surface d'échange thermique.

2. Machine électrique tournante selon la revendication 1, dans laquelle les deux parties de support de diodes positives (66) sont formées chacune par une plaque de support séparée et qui sont disposées selon une configuration en V et fixées à chacune de leurs extrémités au palier arrière, et en ce que les fixations adjacentes (54) des deux plaques sont communes.

3. Machine électrique tournante selon la revendication 2, dans laquelle les deux plaques de support (51, 51') comportent à leurs extrémités adjacentes chacune une patte de fixation (54) traversée d'un trou de passage (55) d'un organe de fixation et en ce qu'à l'état assemblé, les deux pattes de fixation (54) sont superposées de façon que leur trou de passage (55) soient axialement aligné.

4. Machine électrique tournante selon la revendication 3, dans laquelle chaque patte de fixation (54) a une hauteur réduite par rapport à la hauteur de la plaque de support et présente avantageusement une hauteur moitié à la hauteur de la plaque.

5. Machine électrique tournante selon la revendication 1, dans laquelle l'orientation des ailettes de refroidissement (60) vers l'axe de la machine est choisie de façon qu'elles s'étendent sensiblement radialement dans la zone de milieu du dispositif formé par les deux parties de support.

6. Machine électrique tournante selon la revendication 5, dans laquelle la longueur radiale des ailettes (60) varie sur la longueur des parties des supports des diodes positives (66), de façon que leur bord avant, dans la zone de milieu du dispositif formé par les deux parties se trouve sur un arc de cercle coaxial à l'axe de la machine.

7. Machine électrique tournante selon la revendication 5, dans laquelle les ailettes de refroidissement (60) sont réparties dans la zone du milieu du dispositif (50) du support de diodes positives (66) de façon sensiblement régulière.

8. Machine électrique tournante selon la revendication 1, dans laquelle les diodes positives (66) sont implantées sur une face arrière (62) parallèle à l'axe de la machine, du dispositif (50, 51) de support.

9. Machine électrique tournante selon la revendication 1, dans laquelle chaque partie de support de diodes positives (66) porte sur une face arrière (62)) parallèle à l'axe de la machine un muret (65, 73, 75, 80) qui fait saillie perpendiculairement de la face arrière (62) et sert de support d'implantation des diodes positives (66).

10. Machine électrique tournante selon la revendication 9, dans laquelle le muret (65) est disposé au milieu de la hauteur de la face arrière (62) d'une partie de support (51, 51') de diodes positives (66).

11. Machine électrique tournante selon la revendication 9, dans laquelle le muret (73, 75) est disposé à une extrémité axiale de la face arrière (62) d'une partie (51, 51') de support de diodes positives (66).

12. Machine électrique tournante selon la revendication 9, dans laquelle les diodes positives (66) et les diodes négatives (69) qui sont implantées dans un support (67) faisant partie du palier arrière (68) sont montées tête-bêche ou.parallèle.

13. Machine électrique tournante selon la revendication 1, dans laquelle des ailettes de refroidissement (60) s'étendent dans la zone entre deux diodes positives (66) adjacentes.

## Patentansprüche

1. Rotierende elektrische Maschine, insbesondere Lichtmaschine für ein Kraftfahrzeug, umfassend eine Kühlvorrichtung, um eine Zwangsströmung eines Kühlmittels, wie Luft, in der axialen Richtung der Maschine zwischen Kühlrippen (60) zu erzeugen, und die eine Stromgleichrichterbaugruppe aufweist, wobei die Baugruppe Folgendes aufweist:
- eine Trägervorrichtung mehrerer positiver Dioden (66), die zwei Teile eines Diodenträgers aufweist,
• wobei jeder Teil des Trägers die allgemeine Form einer Platte von länglicher Form aufweist, die in der Umfangsrichtung um die Achse der Maschine ausgerichtet sind,
• wobei die Trägervorrichtung an dem hinteren Lager (68) durch drei Befestigungen (53, 54, 54', 84, 85) befestigt ist, wobei eine der drei in dem Verbindungsbereich (54, 54', 84) der zwei Teile (51) angeordnet ist, und dass die Baugruppe ferner Folgendes aufweist:
- einen Träger mehrerer negativer Dioden (69) in Form von einer Platte, die Teil des hinteren Lagers (68) der Maschine ist,
- einen Diodensteckverbinder (70), und wobei:
• die Träger der positiven (66) und negativen (69) Dioden und der Steckverbinder in Richtung der Achse der Maschine überlagert sind,
• der Träger der positiven Dioden (66) einen positiven Kühlkörper (50, 51, 51') bildet, der auf seiner vorderen Stirnseite, die zur Achse der Maschine gerichtet ist, die Kühlrippen trägt, die sich einerseits in der axialen Strömung und andererseits in der der radialen Richtung der Maschine erstrecken,
• die Vorrichtung des positiven Kühlkörpers (50, 51, 51') in Form von mindestens einem Formteil (50, 51, 51') ausgebildet ist, dessen Seite, die zu der vorgenannten Achse gerichtet ist, Kühlrippen (60) trägt, die eine Wärmeaustauschfläche darstellen.

2. Rotierende elektrische Maschine nach Anspruch 1, wobei die zwei Teile des Trägers der positiven Dioden (66) jeweils aus einer separaten Trägerplatte gebildet sind und die nach einer V-förmigen Konfiguration angeordnet und an jedem ihrer Enden an dem hinteren Lager befestigt sind, und dass die benachbarten Befestigungen (54) der zwei Platten gemeinsam sind.

3. Rotierende elektrische Maschine nach Anspruch 2, wobei die zwei Trägerplatten (51, 51') an ihren benachbarten Enden jeweils eine Befestigungslasche (54) aufweisen, die von einem Durchgangsloch (55) eines Befestigungsorgans durchquert ist, und dass die zwei Befestigungslaschen (54) im zusammengefügten Zustand derart übereinander angeordnet sind, dass ihr Durchgangsloch (55) axial ausgerichtet ist.

4. Rotierende elektrische Maschine nach Anspruch 3, wobei jede Befestigungslasche (54) eine Höhe aufweist, die gegenüber der Höhe der Trägerplatte verringert ist, und vorteilhafterweise eine Höhe aufweist, die die Hälfte der Höhe der Platte ist.

5. Rotierende elektrische Maschine nach Anspruch 1, wobei die Ausrichtung der Kühlrippen (60) in Richtung der Achse der Maschine derart ausgewählt ist, dass sie sich in dem Mittelbereich der Vorrichtung, die durch die zwei Trägerteile gebildet ist, im Wesentlichen radial erstrecken.

6. Rotierende elektrische Maschine nach Anspruch 5, wobei die radiale Länge der Rippen (60) auf der Länge der Teile der Träger der positiven Dioden (66) derart variiert, dass sich ihre Vorderkante in dem Mittelbereich der Vorrichtung, die durch die zwei Trägerteile gebildet ist, auf einem Kreisbogen befindet, der koaxial zu der Achse der Maschine ist.

7. Rotierende elektrische Maschine nach Anspruch 5, wobei die Kühlrippen (60) in dem Mittelbereich der Vorrichtung (50) des Trägers der positiven Dioden (66) im Wesentlichen gleichmäßig verteilt sind.

8. Rotierende elektrische Maschine nach Anspruch 1, wobei die positiven Dioden (66) auf einer Rückseite (62) der Trägervorrichtung (50, 51), die parallel zu der Achse der Maschine ist, angebracht sind.

9. Rotierende elektrische Maschine nach Anspruch 1, wobei jeder Teil des Trägers der positiven Dioden (66) auf einer Rückseite (62), die parallel zu der Achse der Maschine ist, einen Wandteil (65, 73, 75, 80) trägt, der senkrecht von der Rückseite (62) hervorsteht und als Träger zum Anbringen der positiven Dioden (66) dient.

10. Rotierende elektrische Maschine nach Anspruch 9, wobei der Wandteil (65) in der Mitte der Höhe der Rückseite (62) eines Teils des Trägers (51, 51') der positiven Dioden (66) angeordnet ist.

11. Rotierende elektrische Maschine nach Anspruch 9, wobei der Wandteil (73, 75) an einem axialen Ende der Rückseite (62) eines Teils (51, 51') des Trägers der positiven Dioden (66) angeordnet ist.

12. Rotierende elektrische Maschine nach Anspruch 9, wobei die positiven Dioden (66) und die negativen Dioden (69), die in einem Träger (67) angebracht sind, der Teil des hinteren Lagers (68) ist, antiparallel oder parallel befestigt sind.

13. Rotierende elektrische Maschine nach Anspruch 1, wobei sich die Kühlrippen (60) in dem Bereich zwischen zwei benachbarten positiven Dioden (66) erstrecken.

## Claims

1. Electrical rotating machine, in particular an alternator for a motor vehicle, comprising a cooling device for producing a forced flow of a cooling fluid, such as air, in the axial direction of the machine, between cooling fins (60) and comprising an arrangement for rectifying the current, the arrangement comprising:
- a support device for a plurality of positive diodes (66) which comprises two support portions for diodes,
• each portion of the support generally being in the form of an elongate plate, which are aligned in the peripheral direction about the axis of the machine,
• the support device being fixed to the rear bearing (68) by three fixing locations (53, 54, 54', 84, 85), one of the three is located in the junction zone (54, 54', 84) of the two portions (51) and in that the arrangement further comprises
- a support for a plurality of negative diodes (69) in the form of a plate which is part of the rear bearing (68) of the machine,
- a diode connector (70), and wherein:
• the supports of the positive diodes (66) and negative diodes (69) and the connector are superimposed in the direction of the axis of the machine,
• the support of the positive diodes (66) forms a positive radiator (50, 51, 51') which carries, on the front frontal face which is orientated towards the axis of the machine, the cooling fins which extend, at one side, in the axial flow and, at the other side, in the radial direction of the machine,
• the positive radiator device (50, 51, 51') is produced in the form of at least one moulded component (50, 51, 51'), of which the face orientated towards the above-mentioned axis carries cooling fins (60) which produce a heat exchange surface.

2. Electrical rotating machine according to Claim 1, wherein the two support portions of positive diodes (66) are each formed by a separate support plate, and which are arranged in a V-like configuration and fixed at each of the ends thereof to the rear bearing, and in that the adjacent fixing locations (54) of the two plates are common.

3. Electrical rotating machine according to Claim 2, wherein the two support plates (51, 51') each comprise at the adjacent ends thereof a fixing lug (54), through which a through-hole (55) of a fixing member extends, and in that in the assembled state the two fixing lugs (54) are superimposed in such a manner that the through-holes (55) thereof are axially aligned.

4. Electrical rotating machine according to Claim 3, wherein each fixing lug (54) has a reduced height with respect to the height of the support plate and advantageously has half the height of the height of the plate.

5. Electrical rotating machine according to Claim 1, wherein the orientation of the cooling fins (60) towards the axis of the machine is selected so that they extend substantially radially in the central region of the device formed by the two support portions.

6. Electrical rotating machine according to Claim 5, wherein the radial length of the fins (60) varies over the length of the support portions of the positive diodes (66) so that the front edge thereof, in the central region of the device formed by the two portions, is located on a circular arc which is coaxial with the axis of the machine.

7. Electrical rotating machine according to Claim 5, wherein the cooling fins (60) are distributed in the central region of the device (50) of the support of the positive diodes (66) in a substantially regular manner.

8. Electrical rotating machine according to Claim 1, wherein the positive diodes (66) are fitted on a rear face (62), parallel with the axis of the machine, of the support device (50, 51).

9. Electrical rotating machine according to Claim 1, wherein each support portion of the positive diodes (66) carries on a rear face (62) parallel with the axis of the machine a partition wall (65, 73, 75, 80) which projects perpendicularly from the rear face (62) and which acts as a fitting support for the positive diodes (66).

10. Electrical rotating machine according to Claim 9, wherein the partition wall (65) is arranged at the centre of the height of the rear face (62) of a support portion (51, 51') of the positive diodes (66).

11. Electrical rotating machine according to Claim 9, wherein the partition wall (73, 75) is arranged at an axial end of the rear face (62) of a support portion (51, 51') of the positive diodes (66).

12. Electrical rotating machine according to Claim 9, wherein the positive diodes (66) and the negative diodes (69) which are fitted in a support (67) which is part of the rear bearing (68) are mounted in an alternating arrangement or in parallel.

13. Electrical rotating machine according to Claim 1, wherein cooling fins (60) extend in the zone between two adjacent positive diodes (66).
